# EUROPEAN PATENT APPLICATION

(11) **EP 3 874 989 A1**
(43) Date of publication of application: **08.09.2021**
(21) Application number: 21158579.9
(22) Date of filing: 23.02.2021
(51) Int. Cl.: A47B 91/02, F16B 12/12

(54) **SIMPLIFIED ADJUSTABLE LEVELLING SYSTEM FOR FURNITURE AND/OR FURNISHING ITEMS**

(30) Priority: 03.03.2020 IT 202000001000 U
(71) Applicant: LEONARDO S.r.l., 22060 Figino Serenza (CO) (IT)
(72) Inventor: CATTANEO, CARLO, 22060 Figino Serenza (CO) (IT)
(74) Representative: Franco Martegani S.r.l.

(57) **Abstract**

A simplified adjustable levelling system for furniture and/or furnishing items (M) with a bottom (12) and shoulders (11) of the type comprising, in combination: at least one front-foot unit (16,116) and at least one rear-foot unit (17,117), wherein said at least one front-foot unit (16,116) or rear-foot unit (17,117) has a height adjustment mechanism which is accessible from the outside of the foot and can be manoeuvred by means of a tool (29), wherein said system provides that in said at least one front-foot unit (16,116) and at least one rear-foot unit (17,117) the adjustment mechanism can be actuated from the front by means of a tool or screwdriver, wherein a body (18,18f) of at least one front-foot unit (16,116) provides a pair of adjacent holes (23,24), one (23) for actuating said height adjustment mechanism of said at least one front-foot unit (16,116) and the other (24) passing through said body (18, 18f) to act as a support and guide for said tool (29) for actuating said height adjustment mechanism of said at least one rear-foot unit (17,117).

## Description

The present invention relates to a simplified adjustable levelling system for furniture and/or furnishing items.

The most diverse levelling systems applicable to furniture suitable for effecting the adjustment of the rear feet applied to the bottom of the furniture, are known.

In particular, for example, adjustment is required when the bottom of the furniture is not so close to the floor and a good front access is available for the adjustment.

A good access or a minimal difficulty of front access is naturally also required for the rear feet of the system.

There is no intention of resorting to known levelling systems which provide for the provision and assembly of suitable transmission and adjustment rods for the rear feet, known in the prior art.

Furthermore, a system should be created that provides for the minimum number of elements and these elements are in any case simple and easy to assemble.

A further requirement is that of intending to use only a usual screwdriver tool in the absence of any other particular aid.

The absence of transmission rods, fixed or supported to the bottom of the furniture, should not however represent an obstacle for adjusting the rear feet.

A system should also be found that allows its installation and use that is independent of the width of the furniture base and specific application in which it must be used.

This desired universality and simplification with respect to the numerous elements necessary for constituting and actuating the adjustment system of the rear feet are main requirements.

The general objective of the present invention is to provide a simplified adjustable levelling system for furniture and/or furnishing items which is particularly simple with respect to the known systems.

A further objective of the present invention is to provide a simplified adjustable levelling system for furniture and/or furnishing items wherein the bottom is detached from the floor and not necessarily associated with the side shoulders.

Another objective of the present invention is to provide a simplified adjustable levelling system for furniture and/or furnishing items which is suitable for the various configurations of the feet used for levelling the furniture.

Yet another objective of the present invention is to provide a simplified adjustable levelling system for furniture and/or furnishing items which does not provide any transmission rod for actuating the adjustment of the rear feet of the furniture.

A further objective of the present invention is to provide an adjustment levelling system also for the rear feet which is particularly compact and minimizes the elements of which it is composed.

The above-mentioned objectives are achieved by a system having the characteristics indicated in the enclosed claim 1 and the subordinate claims.

The structural and functional characteristics of the present invention and its advantages with respect to the known art can be easily understood from the following description, referring to the attached drawings, which illustrate embodiment examples of the invention itself.

In the drawings:
- figure 1 is a perspective view illustrating a first example of a simplified adjustable levelling system with front adjustment for furniture and/or furnishing items produced according to the present invention applied to a base detached from the floor, with the side shoulder and base indicated in section;
- figure 2 is a perspective view similar to that shown in figure 1 wherein the front- and rear-foot units are shown in section;
- figures 3, 4 and 5 are perspective views from above and below of a body of a single foot unit and a levelling body (figure 5) which can be selectively inserted into the same to define a front- or rear- foot unit respectively;
- figures 6 and 7 are raised side views of the single front and rear unit with the levelling body of figure 5 inserted;

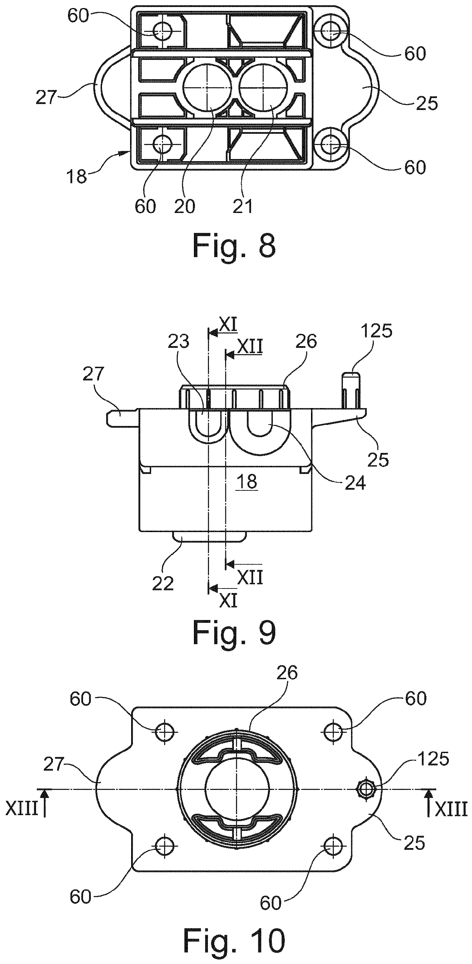

- figures 8, 9 and 10 are a plan view from below, a raised side view and a plan view from above of a body of a single foot unit shown in figure 1;
- figure 11 is a section along the line XI-XI of figure 9;
- figure 12 is a section along the line XII-XII of figure 9;
- figure 13 is a section along the line XIII-XIII of figure 10;
- figure 14 is a perspective view illustrating a second example of a simplified levelling system with front adjustment for furniture and/or furnishing items produced according to the present invention applied to a base detached from the floor, with the side and base indicated in section;
- figure 15 is a perspective view similar to that shown in figure 14 wherein the front- and rear-foot units are shown in section;
- figures 16 to 23 show the different views and sections of a front-foot unit shown in figure 14;
- figures 24 to 30 show the different views and sections of a rear-foot unit shown in figure 14.

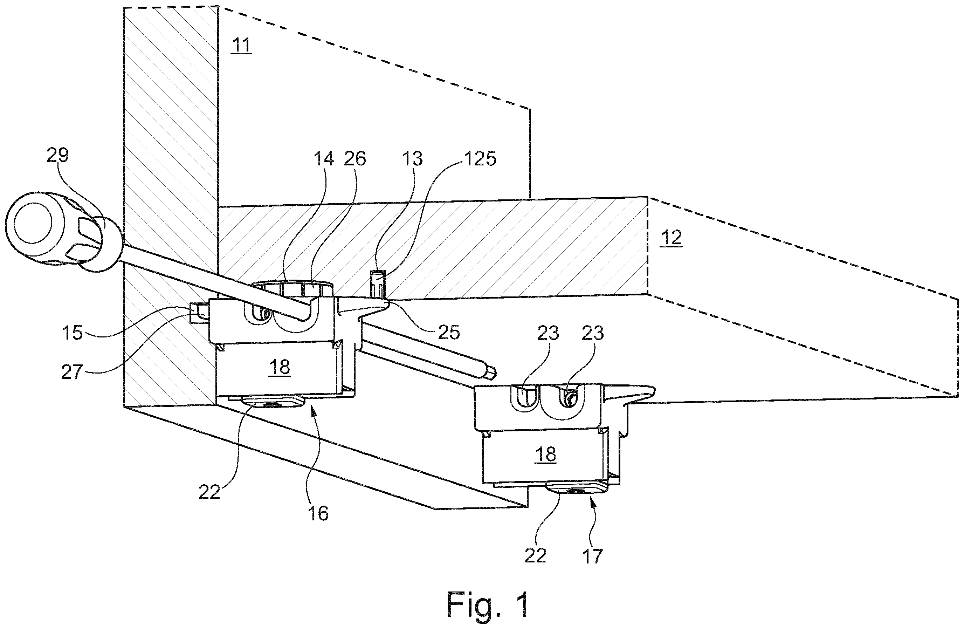

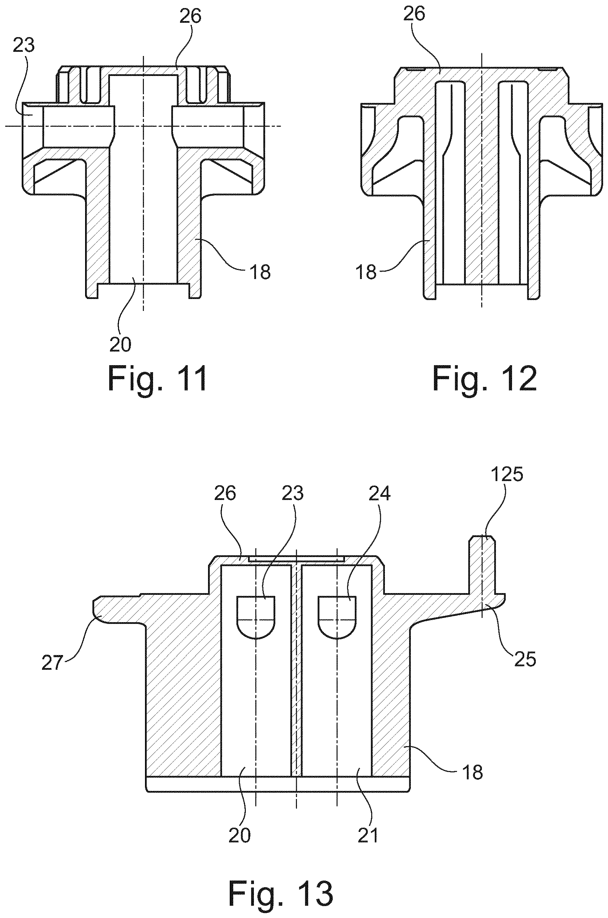

With reference in general to figures 1, 2 and 13, 14, it can be seen that these figures partially illustrate a piece of furniture M equipped with shoulders 11 (sides) - only one of which is shown - associated with a base 12. It can be seen how this base 12 is detached from an underlying floor (not shown) and is associated with said shoulders 11 at a certain height detached from the floor on which the shoulders 11 rest. In this way, a front access is created in order to be able to intervene on the adjustable front and also rear feet.

Indications such as "vertical" and "horizontal", "upper" and "lower" (in the absence of other indications) should be read with reference to the assembly (or operating) conditions and referring to the normal terminology used in current language, where "vertical " indicates a direction substantially parallel to that of the force of gravity vector "g" and a horizontal direction perpendicular to it.

A simplified levelling system with front adjustment for furniture and/or furnishing items produced according to the present invention will now be examined.

Each of the shoulders 11 and the bottom 12 are arranged with specific holes 13, 14 and 15 for housing extensions of both front-foot units 16 and rear-foot units 17.

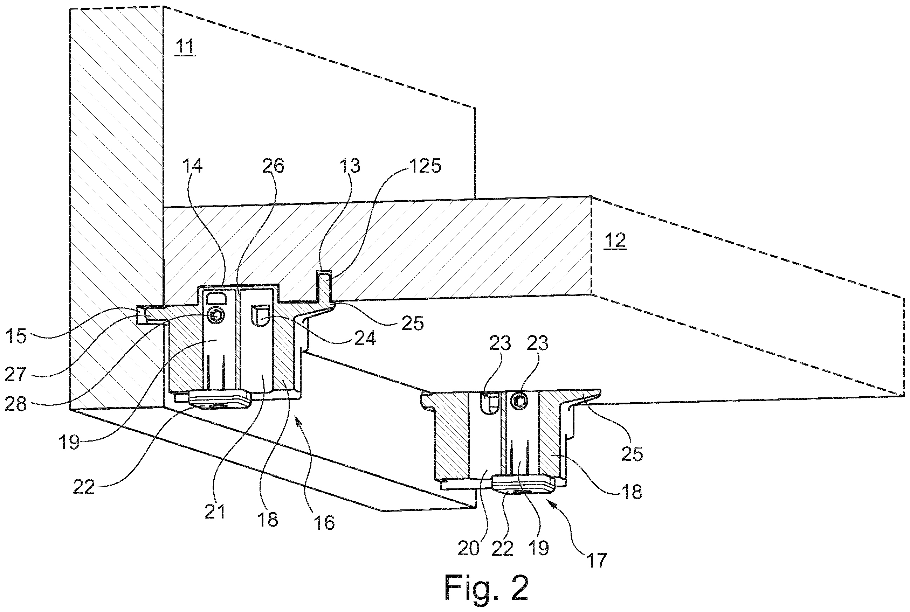

More specifically, figures 1 and 2 show how, in a first example, a front-foot unit 16 and rear-foot unit 17 are fixed at the bottom 12 near one end, and analogously and symmetrically at the other end of the bottom 12 which is not shown.

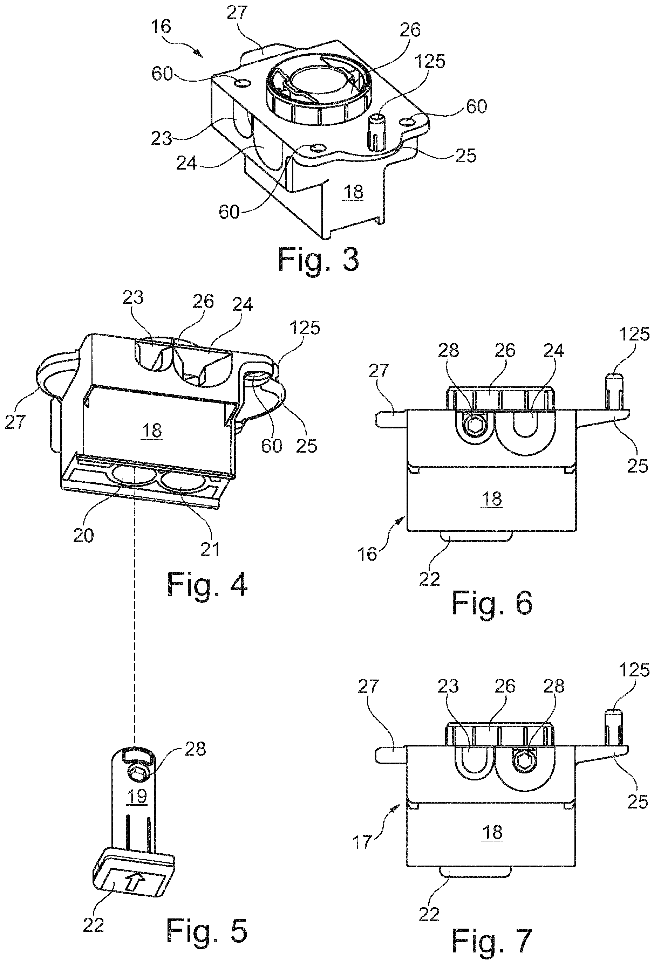

Each foot unit 16, 17 provides a body 18 of a single foot unit and of a levelling body 19 respectively (figure 5) which can be selectively inserted into respective housings 20, 21 to define a front-foot 16 or rear-foot 17 unit.

The body 18 of the single foot unit in fact comprises a pair of cylindrical housings 20, 21, positioned adjacent to each other with a vertical axis, wherein a levelling body 19 is housed, containing the various mechanisms suitable for moving a lower support 22 of a foot downwards and/or upwards, as per patent EP733322 of the applicant, in order to effect the levelling. The internal height adjustment mechanism (not shown) is accessible from the outside and acts on the lower supporting part 22 of the foot to adjust it in height.

As also shown in the sections, the body 18, in addition to the vertical housings 20, 21, provides horizontal pass-through holes 23, 24 formed in the upper part of said housings 20, 21, transversely with respect to the body.

It can also be noted that the body 18 of a single foot unit provides extensions 25, 26 and 27 in its upper surface which are inserted into the above-mentioned holes 13, 14 and 15 of the bottom 12 and shoulders 11.

From a first pass-through hole 23, it is possible to directly act with a screwdriver tip on a screw 28 of the levelling body 19 of the front-foot unit 16. The second pass-through hole 24 allows the passage and support of a screwdriver stem 29 (figure 1) which becomes engaged on a manoeuvring screw 28 of the levelling body 19 of the rear-foot unit 17.

For this purpose, the pass-through hole 24 of the front-foot unit 16 is aligned with the hole 24 of the body of the rear-foot unit 17 from which the above-mentioned manoeuvring screw 28 is accessible.

The body 18 of a single foot unit 16 or 17 has been seen to provide a side flap extension 27 which engages in a hole or seat 15 formed in the shoulder 11. A second extension 25 at the opposite end also comprises a portion in the form of a flap on which the bottom 12 rests and also a peg 125 which is inserted in a hole 13 in the bottom 12.

A third extension 26 of the body 18 if present, for example in cylindrical form, is positioned in the hole 14 of the bottom, but alternatively it may not be provided.

The various extensions can obviously also have another form such as a pin, a wing, a wedge, etc.

According to the front-adjustable levelling system for furniture and/or furnishing items of the present invention, the front- and rear- foot units are easily adjustable. This can be effected thanks to the presence of the pass-through holes 23, 24 produced in the body which give access to and control the internal height-adjustment mechanism.

The provision of a pair of pass-through holes in the body of the single foot unit achieves on the one hand an immediate intervention on the manoeuvring screw 28 of the levelling body 19 of the front-foot unit 16 and on the other hand a guide and a safe and correct support for the tip of the long-stemmed screwdriver or similar tool for intervening on the rear-foot unit 17.

This simplifies any adjustment of the rear foot even in extremely limited spaces.

This provision also allows any further element to be eliminated, such as extensions, transmissions or guides, which serve to ensure the correct direction or orientation of the screwdriver which must be present in additional known systems fixed to the bottom of the furniture.

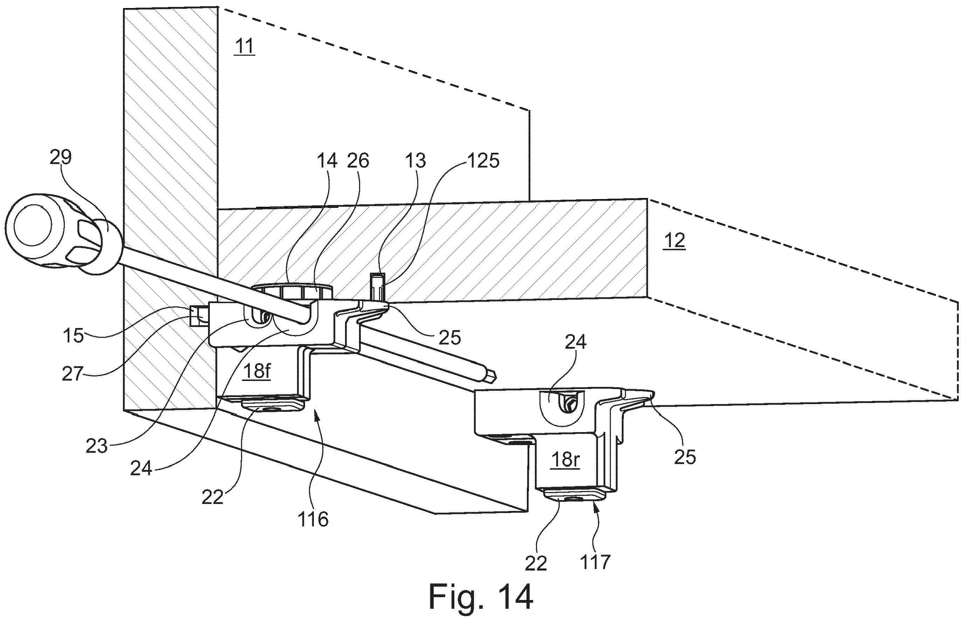

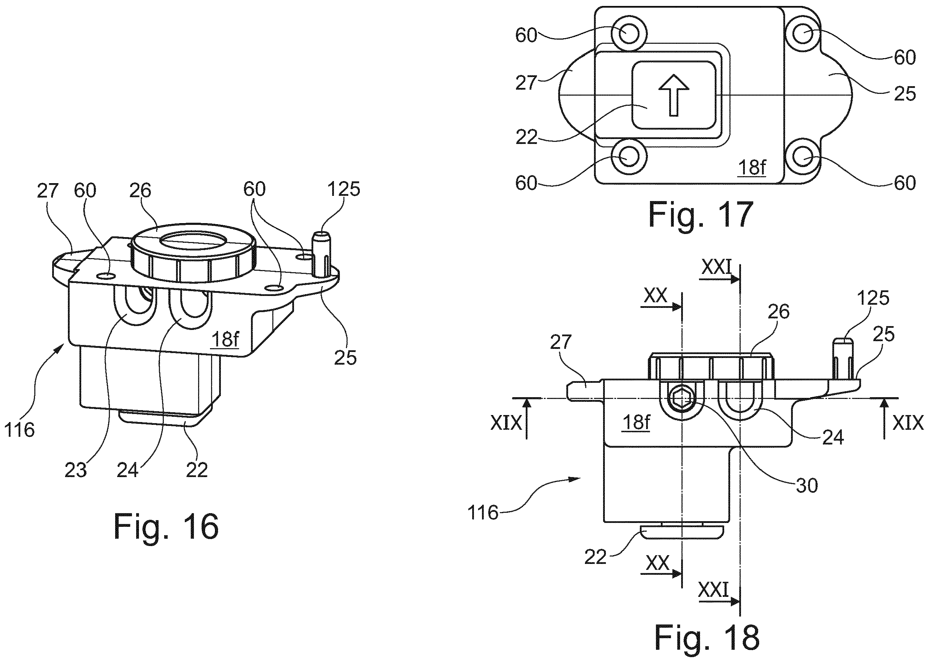

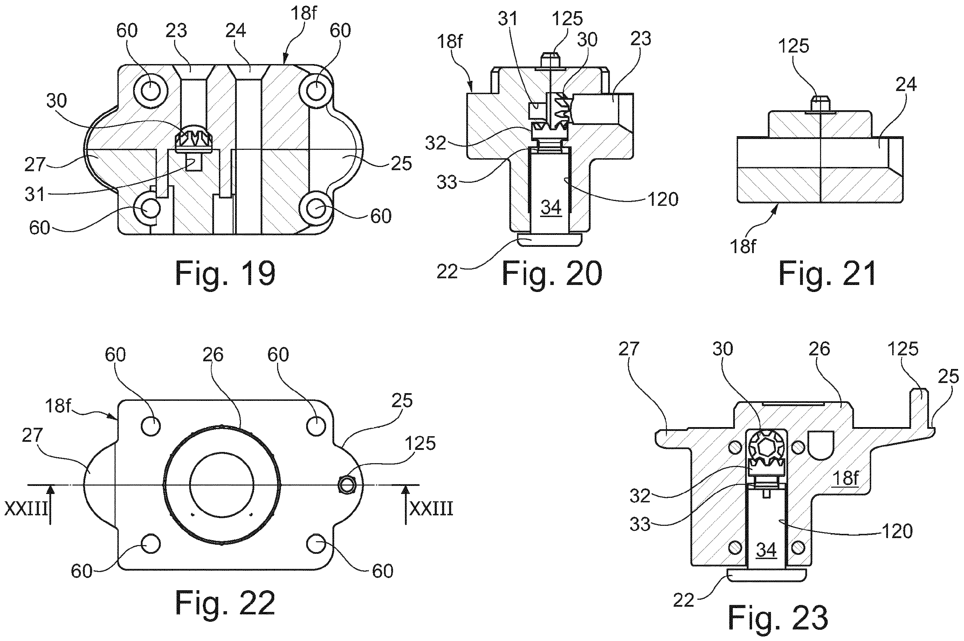

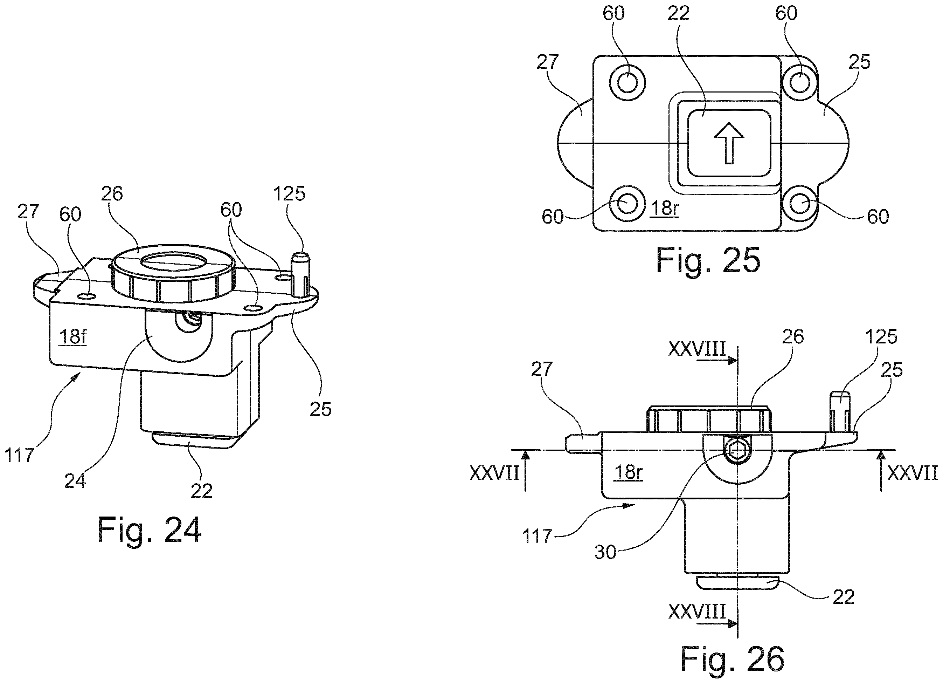

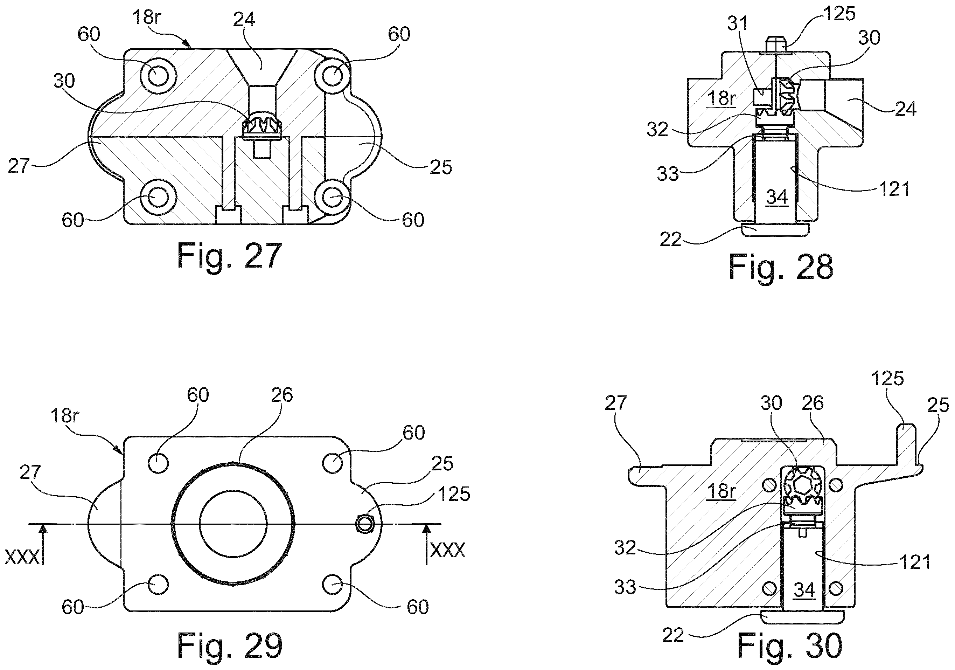

Figures 14 to 30 show, as already mentioned, a further exemplification of a levelling system with front adjustment for furniture and/or furnishing items of the present invention.

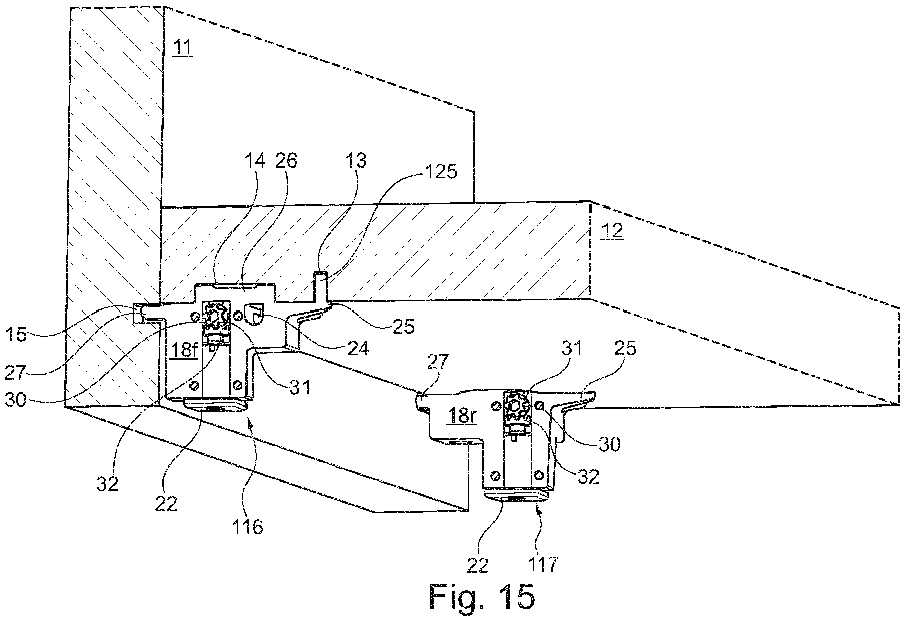

In this example, in which the same elements are indicated with the same reference numbers or preceded by a "1", the levelling body 19 of the foot unit inserted in the body is replaced by a levelling mechanism directly arranged and blocked inside the same. Here again (figures 14 and 15), a front-foot unit 116 and a rear-foot unit 117 are fixed at the bottom 12 near one end, as is also the case symmetrically at the other end of the bottom 12 which is not shown.

Each foot unit 116, 117 provides a body 18f and 18r containing its specific internal height-adjustment mechanism accessible from the outside which acts on the lower supporting part 22 of the foot for adjusting it in height.

There is therefore the provision that in both cases the body 18f or 18r of the single front- or rear-foot unit provides a casing in two half-shells which contains a pinion-toothed crown bevel gear. A pinion 30 is rotatingly positioned within a hole 31 produced in one of the two half-shells of the body 18f or 18r. The recessed head of the pinion 30 is aligned with the respective hole 23 or 24 of the body of the single front-foot unit 116 or rear-foot unit 117.

The pinion 30 engages with a toothed crown 32, formed as the head of a threaded screw 33 engaged in a threaded hole (not shown) axial and internal with respect to a foot element 34 which ends with a lower supporting part 22. The foot element 34 is movable within a seat formed in the two coupled half-shells of the body. The foot element 34 is, as already mentioned, movable or sliding so as to be adjustable in height within the housing 120 or 121 or seat formed in the body 18f or 18r.

Figure 14 shows how it is possible to intervene on the front-foot 116 or rear-foot 117 units.

The front-foot unit 116, in fact, provides, in the body 18f, the first hole 23 through which it is possible to directly act with a screwdriver tip on the pinion 30. The second pass-through hole 24 is also provided in the body 18f, which allows the introduction, passage and support of a stem of a screwdriver 29 (figure 14) which, after passing through the hole 24, becomes engaged in a pinion 30 positioned in the body 18r of the rear-foot unit 117. Acting on this also promotes the rear adjustment of the system of the present invention and it can be noted that there is no need however for the first hole 23 present in the front-foot unit 116.

Also in this example, the body 18f or the body 18r of a single foot unit 116 or 117 provides for the side flap extension 27 which engages in a hole or seat 15 formed in the shoulder 11. The second extension 25 is also provided at the opposite end of the body which comprises a flap-shaped portion on which the bottom 12 rests in addition to a peg 125 which is inserted in a hole 13 of the bottom 12.

Finally, as previously mentioned, the third extension 26 of the body 18f or 18r, for example in cylindrical form, is positioned in the hole 14 in the bottom, but alternatively it may not be provided.

It should also be noted that in the various embodiments the body 18, 18f or 18r has holes 60 for fixing to the bottom 12 of the furniture M, for example by means of screws or other fixing means.

It can therefore been seen that the system according to the present invention allows the problems arising from the known systems used to be solved, considerably simplifying the adjustment systems for the rear feet allowing a front adjustment.

The provision of a pass-through hole in general in the body of the foot provides a safe and correct guide and support for the tip of the long-stemmed screwdriver or similar tool that actuates the adjustment of the rear-foot unit. This simplifies any adjustment operation.

It is thanks to this invention that any further element that serves to ensure the correct direction or orientation of the screwdriver which must be present in additional known systems in the form of a guide or the like fixed to the bottom of the furniture, is eliminated.

The adjustment of the front feet is then effected in the usual way using a common screwdriver.

In the embodiments of the invention illustrated in the figures, the piece of furniture M is provided with a pair of front-foot units and a pair of rear-foot units. The provisions of the present invention however can also be applied to a piece of furniture M equipped with a single front-foot unit and a single rear-foot unit.

In addition, as can be clearly seen from the figures, the openings of the entry holes of the screwdriver or similar operating tool are flared in order to facilitate the rapid and correct introduction of the tool itself.

The objectives mentioned in the preamble of the description have thus been achieved.

The protection scope of the present invention is defined by the enclosed claims.

## Claims

1. A simplified adjustable levelling system for furniture and/or furnishing items (M) with a bottom (12) and shoulders (11) of the type comprising, in combination: at least one front-foot unit (16,116) and at least one rear-foot unit (17,117), wherein said at least one front-foot unit (16,116) or rear-foot unit (17,117) has a height adjustment mechanism which is accessible from the outside of the foot and can be manoeuvred by means of a tool (29), wherein said system provides that in said at least one front-foot unit (16,116) and at least one rear-foot unit (17,117) the adjustment mechanism can be actuated from the front by means of a tool or screwdriver, wherein a body (18,18f) of at least one front-foot unit (16,116) provides a pair of adjacent holes (23,24), one (23) for actuating said height adjustment mechanism of said at least one front-foot unit (16,116) and the other (24) passing through said body (18,18f) to act as a support and guide for said tool (29) for actuating said height adjustment mechanism of said at least one rear-foot unit (17,117).

2. The system according to claim 1, **characterized in that** said piece of furniture (M) comprises a pair of front-foot units (16,116) and a pair of rear-foot units (17,117).

3. The system according to claim 1 or 2, **characterized in that** each body (18,18f,18r) of said at least one front-foot unit (16,116) and at least one rear-foot unit (17,117) provides at least two extensions (25,26,27) which are inserted into respective holes or seats (13,14,15) of said bottom (12) and of said shoulders (11).

4. The system according to claim 3, **characterized in that** said extensions comprise a first side flap extension (27) from said body (18,18f,18r) which engages in a hole or seat (15) formed in the shoulder (11).

5. The system according to claim 3 or 4, **characterized in that** said extensions comprise a second extension (25) at an opposite end of said body (18,18f,18r) which is also a flap-shaped portion on which the bottom (12) rests and also a peg (125) which is inserted into a hole (13) in the bottom (12).

6. The system according to claim 3, 4 or 5, **characterized in that** said extensions comprise a third extension (26) of said body (18,18f,18r) which extends above it and is positioned in a hole (14) of the bottom (12).

7. The system according to one or more of the previous claims, **characterized in that** each body (18) of said at least one front-foot unit (16) and at least one rear-foot unit (17) comprises a selectively insertable levelling body (19) in respective housings (20,21).

8. The system according to claim 7, **characterized in that** said housings (20,21) are cylindrical, adjacent with a vertical axis, wherein said levelling body (19) is housed, containing mechanisms suitable for moving a lower support (22) of a foot downwards and/or upwards.

9. The system according to one or more of the previous claims from 1 to 6, **characterized in that** a front-foot unit (116) and a rear-foot unit (117) provide a body (18f,18r) containing an internal height-adjustment mechanism accessible from the outside which acts on the lower supporting part (22) of the foot for adjusting it in height, wherein said body (18f,18r) comprises a casing in two half-shells.

10. The system according to claim 9, **characterized in that** said mechanism comprises a pinion-toothed crown bevel pair, wherein a pinion (30) can be actuated from a hole (23 or 24) formed in said body (18f,18r), wherein said pinion (30) engages with a toothed crown (32), formed as the head of a threaded screw (33) engaged in an axial threaded hole and inside a foot element (34) which ends with a lower supporting part (22), said foot element (34) being translatable in a seat formed in said two coupled half-shells of said body (18f,18r) and also sliding and adjustable in height.

11. The system according to one or more of the previous claims, **characterized in that** each body (18,18f,18r) of said at least one front-foot unit (16,116) and at least one rear-foot unit (17,117) has holes (60) for fixing to the bottom (12) of the furniture (M).
